# EUROPEAN PATENT SPECIFICATION

(11) **EP 3 664 744 B1**
(45) Date of publication and mention of the grant of the patent: **08.03.2023**
(21) Application number: 17752353.7
(22) Date of filing: 08.08.2017
(51) Int. Cl.: B23Q 3/00

(54) **METHOD FOR THE POSITIONING OF A BLANK**
VERFAHREN ZUR POSITIONIERUNG EINES ROHLINGS
PROCÉDÉ POUR LE POSITIONNEMENT D'UNE ÉBAUCHE

(43) Date of publication of application: 17.06.2020
(73) Proprietor: Dentsply Sirona Inc., York, PA 17401 (US); DeguDent GmbH, 63457 Hanau (DE)
(72) Inventor: GEBHARDT, Andreas, 63505 Langenselbold (DE); FECHER, Stefan, 63867 Johannesberg (DE); VÖLKL, Lothar, 63773 Goldbach (DE)
(74) Representative: Pichova, Vanda
(86) International application number: PCT/EP2017/070003
(87) International publication number: WO 2019/029791

(56) References cited:
- EP-A1- 3 372 192
- EP-A2- 3 095 412
- DE-U1-202012 008 015

## Description

The invention relates to a method for positioning a blank, in particular a disc-shaped one, which, after being inserted into a holder, is in contact therewith, wherein the holder and an element connected to it in a fixed position has a structural element, such as a receptacle, a recess or a projection.

In particular, the invention relates to a method for producing a prosthesis, in particular a full denture or an implant abutment, comprising at least the method steps
- Positioning of a blank, in particular a disc-shaped one, in a holder,
- Working of the blank in a processing machine,
- Removal of the blank from the holder and performing at least one working step outside of the processing machine,
- Repositioning of the blank in the holder,
- Resume processing of the blank in the processing machine.

Examples of processing steps include the securing of artificial teeth in the machined blank, in the case of the production of a full prosthesis, or the production of parts of an abutment.

Ceramic materials are widely used for the production of dental reconstructions. In this process, blanks are generally machined from the material in a pre-sintered or densely sintered state. For this purpose, it is necessary for the blanks to be fixed in a holder, e.g., through clamping, which in turn is arranged in a processing machine such as a milling machine.

In order to fix the blank in a processing machine, an adapter is provided according to WO02/17815 A1, which is connected on the one hand to the blank and via which, on the other hand, fixing in the processing machine takes place.

Corresponding assemblies are given in EP 0 160 797 B1 and EP 2 036 516 B1.

DE 203 16 004 U1 discloses a metallic blank for the production of a dental prosthesis. The blank has a circumferential groove as well as a notch extending perpendicularly thereto, so that a reproducible clamping can take place in a digitally-controlled dental milling system. The prior art document D1, EP 3 095 412 A2, relates to a blank for producing a dental element (eg a dental model or a dental replacement part) having a first side, a second side and at least one main holding surface spaced from the second side for holding the blank on a holding device, wherein the blank has a standard holding thickness between the main holding surface and the rear side.

In the production of certain tooth replacement parts, in particular of full prostheses or of implant abutments or parts thereof, it is necessary for the blank to be removed from the holder between individual processing steps. This brings the risk that, during repositioning, i.e., re-insertion into the holder, the blank is not in the same position as in the preceding machining step, so that defective tooth replacement parts are produced.

The object of the present invention is to further develop a method of the aforementioned type in such a way that, without changes to the holder and an element in fixed-position connection therewith, it is insured that the blank is always in the desired position in the holder and thus relative to the processing machine, so that machining errors resulting from incorrect positioning of the blank are avoided.

To achieve this aim, the invention essentially provides for the blank to be positioned in the holder by means of an adapter, which is inserted into the holder and the structural element as well as into the blank, the adapter being positively engaged both in the holder or the structural element and in the blank.

In accordance with the invention, an unambiguous positioning of the blank in the holder is facilitated by a separately produced adapter. In this case, the adapter is inserted into a structure which is present in the holder and in an element that is connected thereto in a fixed position, such as a receptacle like a depression, on the one hand, and in a receptacle adapted to a section of the adapter in the blank to insure a fixed-position relationship between the holder and the blank. The receptacle can also be designed as a projection which is surrounded by the adapter at least in sections.

Corresponding structures which are suitable for accommodating or fixing a section of the adapter are present in the holders that are available on the market. Such structures may also be formed as bores into which, a screw element is inserted e.g. for fixing an element which closes a holder, such as a cover. To position the blank, the screw is removed and a correspondingly adapted section of the adapter is positively inserted into the bore. A further section of the adapter then engages in the previously formed mechanical referencing, such as a groove, depression or the like, of the blank.

According to the invention, a separate adapter is used to enable an unambiguous positioning of the blank. There is no need for a holder comprising an integrated structural section, such as a projection, to bring about the desired positioning of the blank in the holder; as an unambiguous positioning is in principle only necessary if a repositioning is required. In contrast, if the holder were to have a projection serving as a positioning aid, then only blanks which have a correspondingly adapted section could be used. According to the teaching of the invention, however, only those blanks that are to be repositioned need to be provided with a mechanical referencing.

The adapter, which can also be referred to as an auxiliary part, can be produced from thermoplastic material such as PMMA, in particular in the processing machine in which the blank itself is machined. For this purpose it is only necessary that the geometries of the structure, such as the receptacle in the blank holder and the referencing to be produced, are available, e.g., in the form of STL files. Naturally, it is also possible to use prefabricated adapters from other materials, e.g., metallic ones.

The receptacle for the adapter in the holder respectively the element requires no connection to the contact surface of the blank in the holder. Rather, the adapter may, for example, have a shape for enveloping or bridging regions of the holder, and sections engaging positively in the holder or in the receptacle, that is the mechanical referencing of the blank.

The teaching according to the invention, i.e., the use of a separately produced adapter, which can be releasably inserted into the holder as well as into the blank and which can also be removed before machining of the blank, is suitable for all types of holders, therefore also for those that circumscribe the blank or envelop it only in part.

The present invention discloses a method for positioning a disc-shaped blank and a method for producing a prosthesis, in particular a full denture, as defined in the claims.

Further details, advantages and features of the invention are derived not only from the claims, and the features to be taken from them - either alone and/or in combination - but also from the examples described below and illustrated by drawings.

### Figures:

- Fig. 1: A top view of a lower part of a first embodiment of a holder to hold a blank,
- Fig. 2: A perspective view of the lower part according to Fig. 1,
- Fig. 3: A top view of a blank,
- Fig. 4: A perspective view of the blank according to Fig. 3,
- Fig. 5: A top view of the lower part of the holder according to Figures 1 and 2 with the blank inserted,
- Fig. 6: A perspective view of the lower part with blank according to Fig. 5,
- Fig. 7: Various views of a first embodiment of an adapter,
- Fig. 8: The lower part of the holder according to Figures 1 and 2 in which the blank according to Figures 2 and 3 is positioned by means of the adapter according to Fig. 7,
- Fig. 9: A perspective view of the arrangement according to Fig. 8,

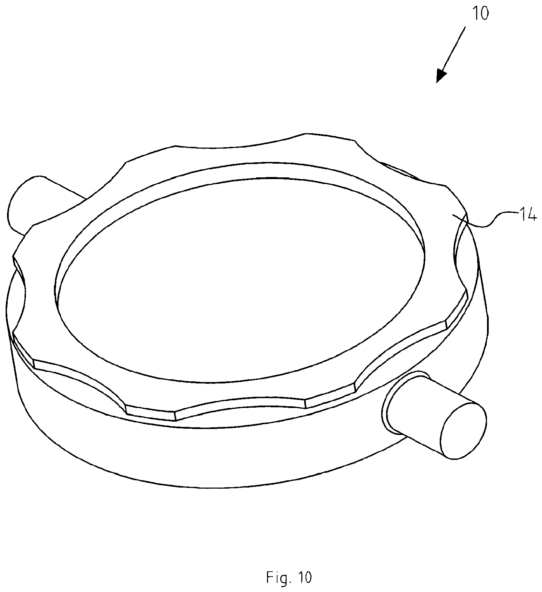

- Fig. 10: A holder with the lower part shown in Figures 1 and 2 and the locking part connected thereto,
- Fig. 11: A second embodiment of a holder,
- Fig. 12: The holder according to Fig. 1 with positioned blank,
- Fig. 13: A further embodiment of an adapter and
- Fig. 14: Implant blanks.

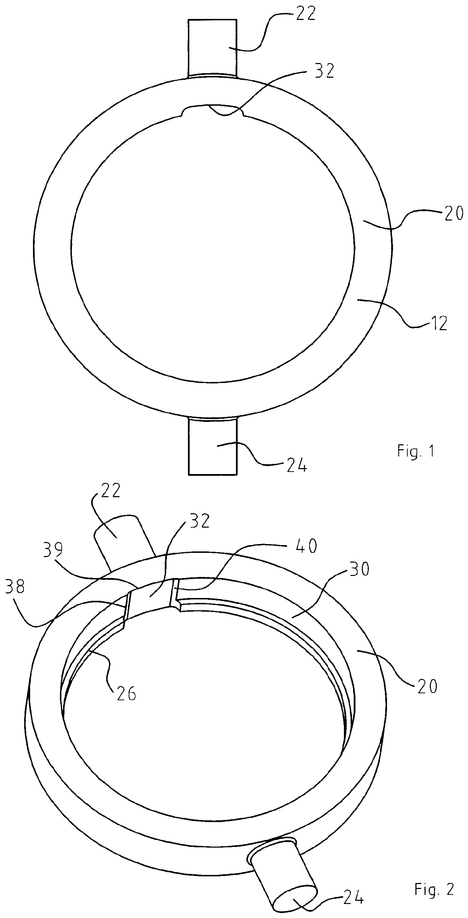

Figures 1 and 2 show a holder 10, comprising a pot-shaped lower part that is open on the bottom side and an upper part 14, or cover, which is connectable thereto, for instance through screws, in an annular manner, to accommodate a disc-shaped blank 16 and to fix it so that it can be processed in a processing machine such as a milling machine through a CAD/CAM process for the production of a dental part, in particular a full denture.

To make certain that the blank 16, which may be, for example, of plastic such as PMMA or a ceramic, such as zirconium dioxide, when it has to be removed from the processing machine and thus from the holder 10 between individual processing steps, in particular in connection with the production of a full denture or parts of abutments, upon re-inserting, i.e., repositioning, assumes exactly that position prior to removal, an adapter 18, also referred to as a positioning aid, is used according to the invention. The adapter 18 brings about a positive connection between the blank 16 and the holder 10, so that the desired exact positioning and repositioning is ensured.

The adapter 18, for instance made from PMMA, is designed in such a way that fixing in the holder 10 takes place by using an existing structural feature of the holder such as a recess or projection, so that changes to the holder itself are not required.

The holder 10 described in the example consists of the lower part 12 which has a circumferential wall 20 that follows a hollow cylinder section from which diametrically opposite shaft stumps 22, 24, referred to as axes, project, which are used for attachment in a processing machine - hereinafter simply referred to as a milling machine. On the bottom side, a substantially circumferential and inwardly-projecting web or flange 26 extends from the circumferential wall 20, onto which the blank 16 with a peripherally extending web or collar 28 is placed, which can be an integral component of the blank 16 itself or a separate element, which is connected to the blank 16, for instance through gluing.

In the example, a recess 32 extends over the height of the circumferential wall 20 in the inner wall 30 of the circumferential wall 20 and is suitable for the insertion of an insert, not shown, into the lower part 12 of the holder 10, which can serve for example to hold individual blanks, as is known, for example, from WO 2016/153986 A1.

In other words, the recess 32 in the lower part 12 is provided for structural reasons. According to the invention, this recess 32 or another suitable structural design of the lower part 12 is used to positively hold the adapter 18 or a section thereof so that it is clearly positioned. A further section of the adapter 18 engages in a mechanical referencing device 34 to be formed in the blank 16, which in the example is designed as a groove extending in the axial direction of the blank 16.

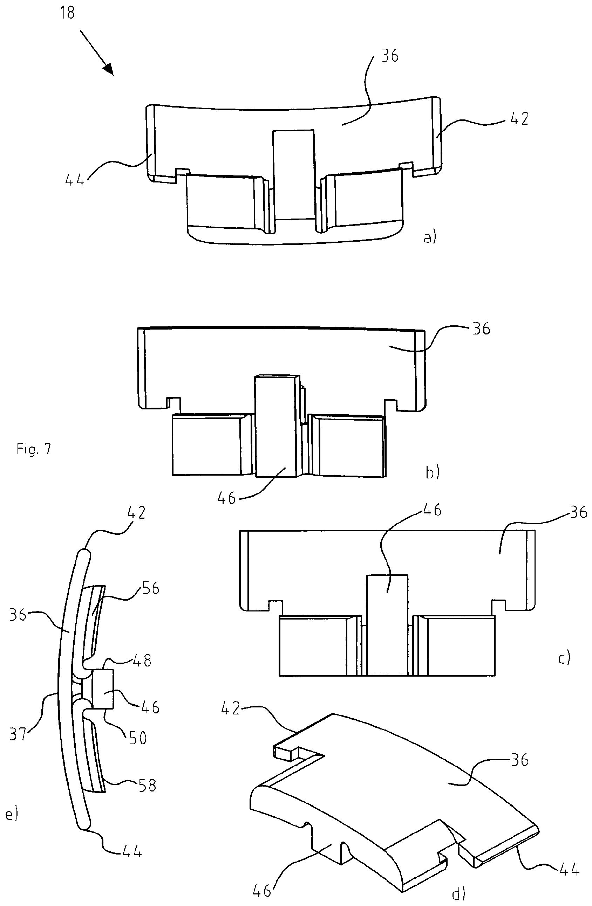

As the graphical representation of Fig. 7 shows, the adapter has an arcuate base section 36, which is adapted in the circumferential direction to the recess 32 and with respect to its boundaries 38, 40. The back surface 37 of the base portion 36 is adapted in its course to the base surface 39 of the recess 32. Thus, the adapter 18 can be positively inserted into the recess 32 without a displacement of the adapter 18 in the direction of the circumferential wall.

Thus, the distance between the side edges 42, 44 of the base part 36 corresponds to the distance between the edges 38, 40 of the recess 32.

A projection 46 protrudes from the inner surface of the base part 36, the groove 36 of which is matched to the geometry so that the distance between the side edges 48, 50 of the projection 46 is equal to the distance of the side edges 52, 54 of the groove 34.

Furthermore, flat-shaped sections 56, 58 in the form of an arc extend from the inner surface of the base section 36 and merge into the circumferential web or collar 28 on the upper side. However, the projections 56, 58 are not mandatory constructive features of the adapter 18.

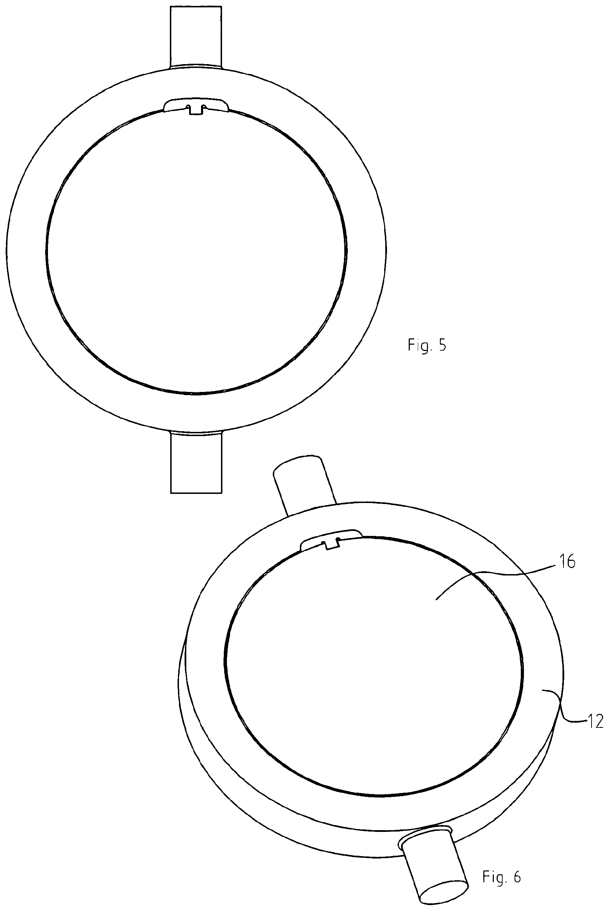

In Figures 5 and 6, the blank 16 is inserted into the lower part 12 of the holder 10 without a positive connection being effected via the adapter 18. It can be seen from the drawing that the blank 16 can be inserted in virtually any desired position. Thus, it is not possible to ensure a predetermined, defined alignment between the blank 16 and the holder 10 or the lower part 12.

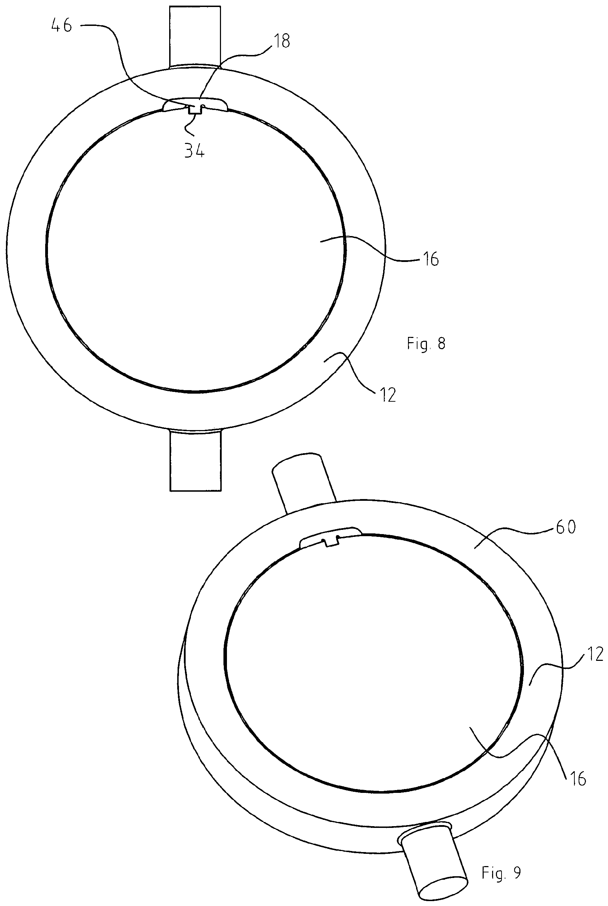

If the adapter 18 is used as shown in the drawings of Figures 8 and 9, then the blank 16 can only be inserted into the lower part 12 in the position in which the groove 34 is aligned with the projection 46 and can penetrate into the groove 34. Thus, the blank 16 can be inserted into the holder 10 in a clear position and thus into the lower part 12. After removal and subsequent repositioning, no other position can be assumed between the blank 16 and the lower part 12 of the holder 10 than that specified by the adapter 18. After correct positioning of the blank 16 in the lower part 12, this is closed by means of the annular upper part 14 designated as the cover. In particular, the upper part 14 is screwed into the lower part 12.

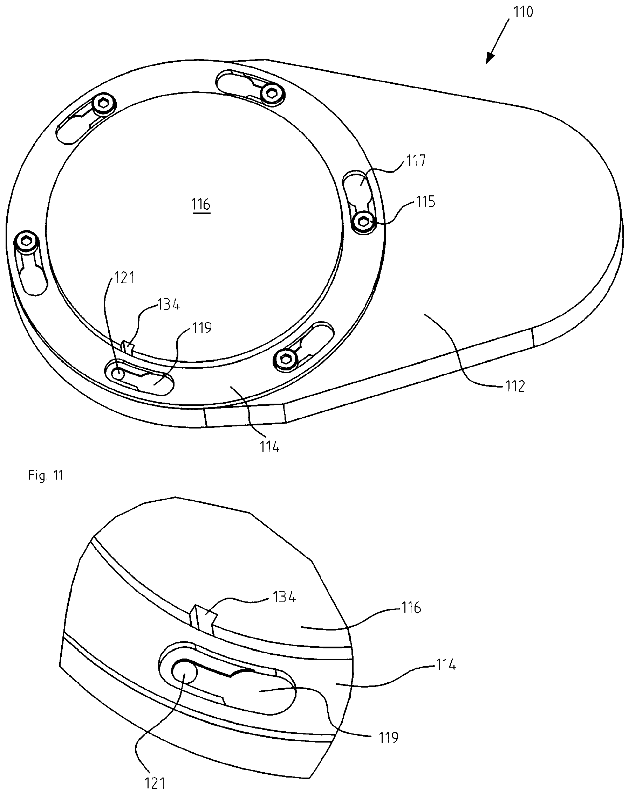

The adapter 18 in Fig. 7 is shown purely by way of example, without thereby limiting the invention. There is also the possibility, for example if a recess is provided in the upper edge 60 of the upper part 12, to form an adapter which can be inserted into the corresponding recess and, on the other hand, into a mechanical referencing such as a bore or groove present in the blank 16. In this case, the adapter would have to bridge a section of the lower part 12, as will be explained with reference to Figures 11 to 13.

Other structured regions which are present in a holder can also be used to enable a form-fitting reception of an adapter which, in accordance with the teaching of the invention, must in turn positively engage a mechanical referencing of a blank to achieve a positioning and repositioning of the blank in a desired manner in the corresponding holder, without the possibility of any deviation in the position of the blank relative to the holder after re-insertion.

A further embodiment of a holder 110 and an adapter 118 is shown in Figures 11 to 13 to enable a clear positioning and repositioning of a blank 116 in accordance with the teaching of the invention.

The holder 110 comprises a lower part 112 in which a recess (not shown in the drawing) corresponding to the size of the blank 116 is present in order to provide the possibility that the blank 116 can be machined from both sides in a milling machine.

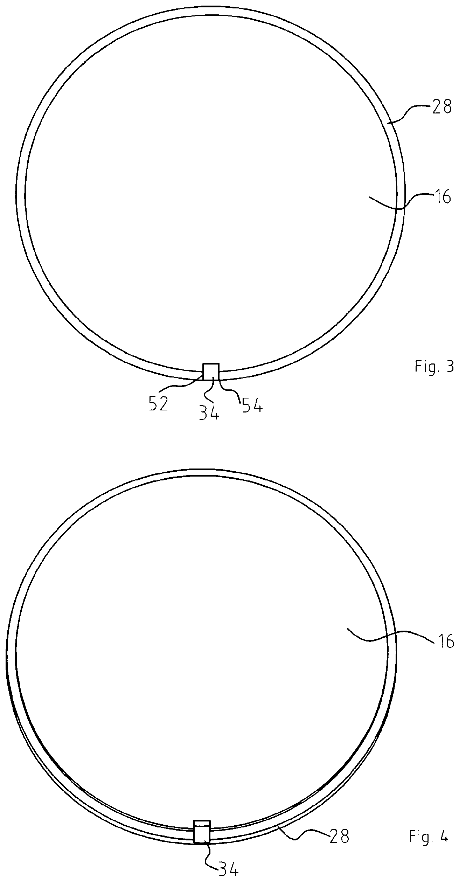

The blank 116 is fixed in the holder 110 by means of a top part 114 designated as a clamping ring in the holder 110. In this case, the blank 116 rests with a circumferentially extending web or collar, as explained with reference to Figures 3 and 4, on a corresponding shoulder of the lower part 112.

The clamping ring 114 is fixed with the lower part 112 by means of screws, one of which is indicated by the reference number 115 by way of example only. In order to allow the clamping ring 114 to be easily connected to, or disconnected from, the lower part 112 without having to remove the screw 115, corresponding oblong-shaped holes 117 are provided in the clamping ring 114 and have a clearance which is greater than the diameter of the head of the screw 115 in at least one section and is less than it in at least another section.

One of these oblong-shaped holes and the bore accessible therefrom are used to positively receive a section of the adapter 118. In the example of Fig. 11, an oblong-shaped hole 119 with the bore 121 is used. For this purpose, it is naturally necessary to first remove the screw required for fixing the clamping ring 114.

A base section 136 of the adapter 118 is introduced into the oblong-shaped hole 119. For this purpose, and without limiting the inventive teaching, the adapter 118 has a cuboid central part 138 with end-rounded sections 140, 142, as shown in the drawing for adaptation to the oblong-shaped hole 119. In fact, the base section 136 must be geometrically adapted to the geometry of the oblong-shaped hole 119 in such a way that movement is prevented in the radial direction of the clamping ring 114. In the longitudinal direction of the oblong-shaped hole 119 this is prevented by the fact that a pin-shaped projection 148, which is adapted to the internal geometry of the bore 121, protrudes from the base section 136. The projection 148 is adapted to the bore 121 in such a way that there is a positive engagement preventing, in principle, a relative movement. A cuboid projection 146 protrudes from the opposing flat side 150 of the base section 136, to which a mechanical referencing introduced in the blank 116 is adapted in the form of a groove 134 at least in sections so that a positive engagement of the projection 146 into the groove 134 is made possible. The result is that when the adapter 118 is inserted, this ensures a clear orientation of the blank 116 relative to the holder 110, i.e., repositioning can take place without a change in the position from that before the removal of the blank 116 from the holder 110.

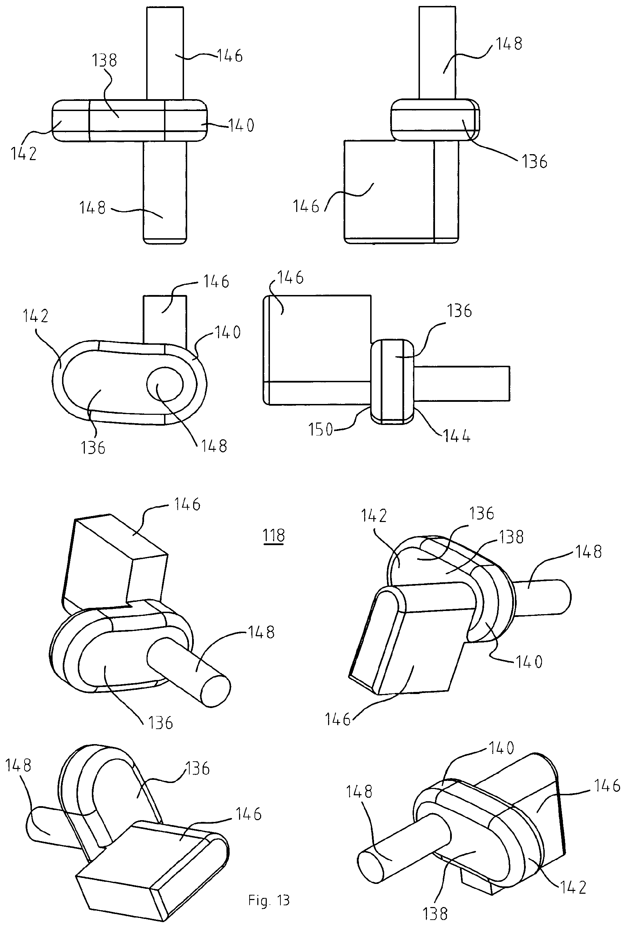

The geometry of the adapter 118 is evident from the diagram in Fig. 13, without the need for further descriptions.

In Fig. 11, the adapter 118 is not inserted so that, as a result, the blank 116 can be fixed in any desired orientation to the holder 110. This possibility no longer exists if the adapter 118 on the one hand positively engages with the projection 148 into the bore 121 which is provided with an internal thread and, on the other hand, positively engages in the groove 134 with the projection 146.

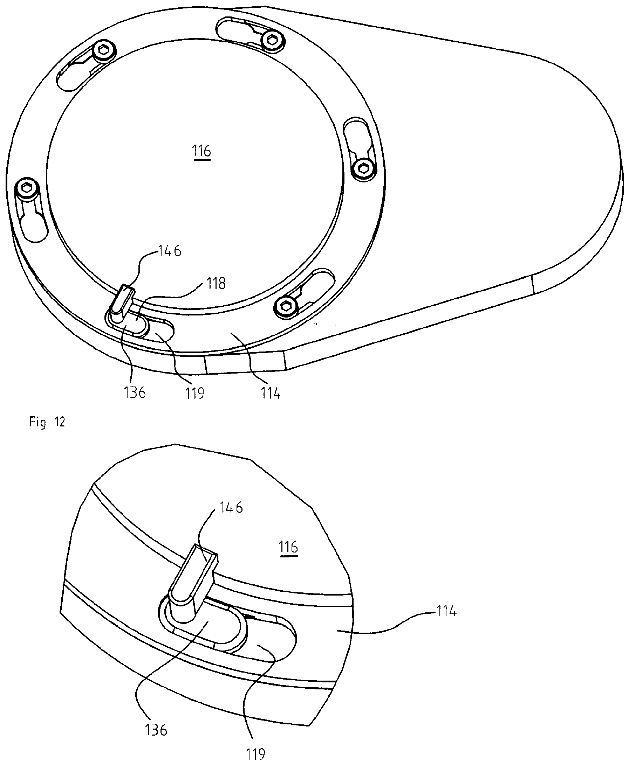

It can also be seen that the projection 146, which engages positively in sections with the groove 134, bridges the clamping ring 114. This is also illustrated in Fig. 12.

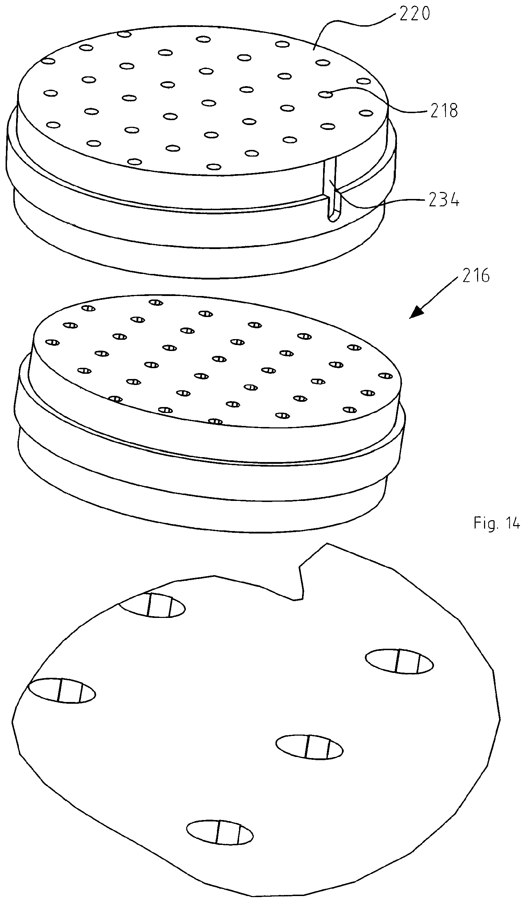

In the middle view of Fig. 14, an implant blank 216 is shown which can have a geometry which is the same as that of the blank 16. In a departure from the blank 16, the implant blank has bores, some of which are identified by the reference numbers 218, 220 by way of example. The bores 218, 220 are geometrically adapted to the outer geometry of base elements of abutments. This is preferably a titanium base, on which a ceramic post is placed to form the abutment. The blank 216 is made from the corresponding material of the post, in particular zirconium dioxide.

An enlarged view of a section of the blank 216 is shown in the lower view in Fig. 14.

According to the teaching of the invention, the blank 216 is provided with a mechanical referencing such as groove 234, as shown in the upper view in Fig. 14. This insures that an unambiguous repositioning is made possible in a holder in which the groove positively receives a section of an adapter, which is in turn positively connected to a holder (not shown).

## Claims

1. A method for positioning a disc-shaped blank (16, 116, 216), which after insertion in a holder is in contact therewith, wherein the holder (10, 110) has a structural element (32, 119, 121) such as a recess, such as a depression or a projection, wherein the blank (16, 116, 216) is positioned in the holder (10, 110) by means of an adapter (18, 118), which is inserted in both the holder (10, 110) and the structural element (32, 119, 121),
and the blank (16, 116, 216), wherein the adapter positively engages with the holder (10, 110) and the structural element (32, 119, 121), and with the blank (16, 116, 216);
wherein the blank (16, 116, 216) after positioning in the holder (10, 110) is processed, removed from the holder and then repositioned in the holder by means of the adapter (18, 118);
wherein the blank (16, 116, 216) is provided with a mechanical referencing (34, 134), such as a recess, such as a groove, which interacts with a first section (46, 146) of the adapter (18, 118) for positioning of the blank, the first section (46, 146) penetrates into the mechanical referencing;
and wherein for unambiguous positioning of the blank (16, 116, 216) the adapter (18, 118) with a second section (36, 136) interacts with the structural element (34, 119, 121) and with the first section (46, 146) interacts with the mechanical referencing (34, 134) of the blank, wherein between the first section and the second section a section of the adapter (18, 118) bridges over a section of the holder (10, 110).

2. The method according to claim 1,
**characterized in that**
the holder (10, 110) contacts the blank (16, 116, 216) without projection.

3. The method for the production of a prosthesis, in particular a full denture, comprising at least the following steps
- Positioning of a disc shaped blank (16, 116, 216), in a holder (10, 110),
- Processing of the blank in a processing machine,
- Removal of the blank from the holder and working of the blank outside of the processing machine,
- Repositioning of the blank in the holder,
- Repeat processing of the blank in the processing machine,
**characterized in that**
both the positioning and repositioning of the blank (16, 116, 216) in the holder (10, 110) is by means of an adapter (18, 118) which interacts both with the holder or a fixed-position element connected to the holder and with a mechanical referencing (34, 134) formed in the blank and adapted to a section of the adapter.

4. The method according to at least one of the above claims,
**characterized in that**
the blank (16, 116, 216) is such that its circumferential surface or a section of the circumferential surface or an element that is connected to the blank or formed integrally with it, such as a collar (28), is in contact preferably circumferentially or substantially circumferentially with the holder that abuts the circumferential surface respectively the section.

5. The method according to at least one of the above claims,
**characterized in that**
the blank (16, 116, 216) is one from which a dental prosthesis or sections of an abutment can be produced.

## Patentansprüche

1. Verfahren zur Positionierung eines scheibenförmigen Rohlings (16, 116, 216), der nach dem Einsetzen in eine Halterung damit in Kontakt ist, wobei die Halterung (10, 110) ein Strukturelement (32, 119, 121), wie eine Vertiefung, wie eine Senkung oder einen Vorsprung, aufweist, wobei der Rohling (16, 116, 216) in der Halterung (10, 110) mittels eines Adapters (18, 118) positioniert ist, der sowohl in der Halterung (10, 110) als auch in dem Strukturelement (32, 119, 121) und dem Rohling (16, 116, 216) eingesetzt ist, wobei der Adapter formschlüssig mit der Halterung (10, 110) und dem Strukturelement (32, 119, 121) und mit dem Rohling (16, 116, 216) im Eingriff steht;
wobei der Rohling (16, 116, 216) nach dem Positionieren in der Halterung (10, 110) verarbeitet, aus der Halterung entfernt und dann in der Halterung wieder mittels des Adapters (18, 118) positioniert wird;
wobei der Rohling (16, 116, 216) mit einer mechanischen Referenzierung (34, 134), wie einer Vertiefung, wie einer Nut, versehen ist, die mit einem ersten Abschnitt (46, 146) des Adapters (18, 118) zum Positionieren des Rohlings in Wechselwirkung tritt, wobei der erste Abschnitt (46, 146) in die mechanische Referenzierung eindringt;
und wobei zur eindeutigen Positionierung des Rohlings (16, 116, 216) der Adapter (18, 118) mit einem zweiten Abschnitt (36, 136) mit dem Strukturelement (34, 119, 121) in Wechselwirkung steht, und mit dem ersten Abschnitt (46, 146) mit der mechanischen Referenzierung (34, 134) des Rohlings in Wechselwirkung steht, wobei zwischen dem ersten Abschnitt und dem zweiten Abschnitt ein Abschnitt des Adapters (18, 118) einen Abschnitt der Halterung (10, 110) überbrückt.

2. Verfahren nach Anspruch 1,
**dadurch gekennzeichnet, dass**
die Halterung (10, 110) den Rohling (16, 116, 216) ohne Vorsprung kontaktiert.

3. Verfahren zum Herstellen einer Prothese, insbesondere einer Vollprothese, das mindestens die folgenden Schritte umfasst
- Positionieren eines scheibenförmigen Rohlings (16, 116, 216) in einer Halterung (10, 110),
- Verarbeiten des Rohlings in einer Verarbeitungsmaschine,
- Entfernen des Rohlings aus der Halterung und Bearbeiten des Rohlings außerhalb der Verarbeitungsmaschine,
- Wiederpositionieren des Rohlings in der Halterung,
- Wiederholen des Bearbeitens des Rohlings in der Verarbeitungsmaschine,
**dadurch gekennzeichnet, dass**
sowohl das Positionieren als auch das Wiederpositionieren des Rohlings (16, 116, 216) in der Halterung (10, 110) mittels eines Adapters (18, 118) erfolgt, der sowohl mit der Halterung oder einem Element mit feststehender Position, das mit der Halterung verbunden ist, als auch mit einer mechanischen Referenzierung (34, 134), die in dem Rohling gebildet und an einen Abschnitt des Adapters angepasst ist, in Wechselwirkung tritt.

4. Verfahren nach mindestens einem der vorstehenden Ansprüche,
**dadurch gekennzeichnet, dass**
der Rohling (16, 116, 216) derart ist, dass seine Umfangsoberfläche oder ein Abschnitt der Umfangsoberfläche oder ein Element, das mit dem Rohling verbunden oder einstückig damit gebildet ist, wie ein Bund (28), bevorzugt umfänglich oder im Wesentlichen umfänglich mit der Halterung in Kontakt steht, die an die Umfangsoberfläche bzw. den Abschnitt anliegt.

5. Verfahren nach mindestens einem der vorstehenden Ansprüche,
**dadurch gekennzeichnet, dass**
der Rohling (16, 116, 216) ein Rohling ist, aus dem eine Zahnprothese oder Abschnitt eines Abutments erzeugt werden kann.

## Revendications

1. Procédé de positionnement d'une ébauche discoïde (16, 116, 216), qui après insertion dans un support est en contact avec celui-ci, le support (10, 110) comportant un élément structural (32, 119, 121) tel qu'un évidement, tel qu'une dépression ou une saillie,
l'ébauche (16, 116, 216) étant positionnée dans le support (10, 110) au moyen d'un adaptateur (18, 118), qui est inséré à la fois dans le support (10, 110) et dans l'élément structural (32, 119, 121), ainsi que dans l'ébauche (16, 116, 216), l'adaptateur s'engageant positivement avec le support (10, 110) et avec l'élément structural (32, 119, 121), ainsi qu'avec l'ébauche (16, 116, 216) ;
l'ébauche (16, 116, 216) après positionnement dans le support (10, 110) étant traitée, retirée du support puis repositionnée dans le support au moyen de l'adaptateur (18, 118) ;
l'ébauche (16, 116, 216) comportant un référencement mécanique (34, 134), tel qu'un évidement ou une rainure, qui coopère avec une première section (46, 146) de l'adaptateur (18, 118) pour le positionnement de l'ébauche, la première section (46, 146) pénétrant dans le référencement mécanique ;
et pour un positionnement sans ambiguïté de l'ébauche (16, 116, 216), l'adaptateur (18, 118), conjointement avec une seconde section (36, 136), coopère avec l'élément structural (34, 119, 121) et conjointement avec la première section (46, 146) coopère avec le référencement mécanique (34, 134) de l'ébauche, entre la première section et la seconde section, une section de l'adaptateur (18, 118) enjambant une section du support (10, 110).

2. Procédé selon la revendication 1,
**caractérisé en ce que**
le support (10, 110) vient en contact avec l'ébauche (16, 116, 216) sans saillie.

3. Procédé de fabrication d'une prothèse, en particulier d'un dentier complet, comprenant au moins les étapes suivantes
- positionnement d'une ébauche discoïde (16, 116, 216), dans un support (10, 110),
- traitement de l'ébauche dans une machine de traitement,
- retrait de l'ébauche du support et travail de l'ébauche hors de la machine de traitement,
- repositionnement du l'ébauche dans le support,
- répétition du traitement de l'ébauche dans la machine de traitement,
**caractérisé en ce que**
le positionnement et le repositionnement de l'ébauche (16, 116, 216) dans le support (10, 110) se font au moyen d'un adaptateur (18, 118) qui coopère à la fois avec le support ou avec un élément à position fixe relié au support et avec un référencement mécanique (34, 134) formé dans l'ébauche et adapté à une section de l'adaptateur.

4. Procédé selon au moins l'une des revendications précédentes,
**caractérisé en ce que**
l'ébauche (16, 116, 216) est telle que sa surface circonférentielle ou une partie de la surface circonférentielle ou un élément relié à l'ébauche ou faisant partie intégrante de celle-ci, tel qu'une collerette (28), est en contact de préférence circonférentiellement ou sensiblement circonférentiellement avec le support qui bute sur la surface circonférentielle et respectivement sur la section.

5. Procédé selon au moins l'une des revendications précédentes,
**caractérisé en ce que**
l'ébauche (16, 116, 216) est une ébauche à partir de laquelle on peut produire une prothèse dentaire ou des sections d'un ancrage.
